## Europäisches Patentamt
## European Patent Office
## Office européen des brevets

(19)

(11) Publication number: **0 082 722**
**A2**

(12) # EUROPEAN PATENT APPLICATION

(21) Application number: **82306832.5**

(22) Date of filing: **21.12.82**

(51) Int. Cl.³: **G 06 F 11/00**
**G 06 F 11/22**

(30) Priority: **21.12.81 US 332755**

(43) Date of publication of application:
**29.06.83 Bulletin 83/26**

(84) Designated Contracting States:
**DE FR GB IT**

(71) Applicant: **GENERAL ELECTRIC COMPANY**
**1 River Road**
**Schenectady New York 12305(US)**

(72) Inventor: **Denison, Andrew Norman**
**Box 157 R.D. 1**
**Conklin New York 13748(US)**

(72) Inventor: **Schmid, Hermann**
**R.D. 5 Aitchison Road**
**Binghampton New York 13905(US)**

(72) Inventor: **Weir, Kenneth Allen**
**12 Richie Road**
**Binghampton New York, 13901(US)**

(74) Representative: **Hughes, Brian P. et al,**
**Graham Watt & Co. Riverhead**
**Sevenoaks, Kent TN13 2BN(GB)**

(54) Computer system with auxiliary service computer.

(57) A single board computer system includes a primary computer (10) and a service computer (30), connected to the primary computer through a local bus (20). The service computer serves to relieve the primary of auxiliary functions and to enhance the system by performing system self-test, timing, intelligent watchdog monitor, intelligent serial I/O user interface, real-time monitoring of data contained in the system, and system configuration. Operator interaction with the primary computer is afforded with insignificant interruption to the real-time behavior of the primary computer.

EP 0 082 722 A2

./...

CLOCK `14`

LOCAL PROGRAM AND DATA MEMORY `12`

FIG.1A

CPU `11`

`10`

DATA

LATCH ADDRESS

DECODING AND CONTROL

MEMORY INTERFACE

LOCAL BUS 20

`16`

BYTE TO WORD TRANSLATION

CONTROL

CONTROL STATUS

DATA ADDRESS 31

8

ADDRESS

8

CPU

BUS ACKNOWLEDGE `42`

BUS REQUEST LINE `41`

MASTER RESET `43`

SERVICE MICROCOMPUTER

`11`

`30`

`15`

INTERRUPT HANDLER

RECEIVER / TRANSMITTER

WATCHDOG FAULT

ITERATION RATE `2`

RESET

IN

OUT

SYSTEM

MEMORY ERROR

USER TERMINAL

`13`

`16`

SYSTEM BUS INTERFACE

FAST SLOW PROM SWITCH `17`

FIG.1 B

-1-

## COMPUTER SYSTEM
## WITH AUXILIARY SERVICE COMPUTER

### Background of the Invention

#### Field of the Invention

This invention relates to a computer system, and more particularly, to such a system including a primary computer for processing digital information and an auxiliary service computer which serves to relieve the primary computer of certain auxiliary functions and enhance system operation.

#### Description of the Prior Art

In addition to executing the main program, digital processors must perform many auxiliary functions, such as: data transfer with peripheral equipment (i.e., terminals, printers); initiated go/no-go, or periodic self-test operations; and terminal interface program command execution from user and maintenance terminals. In conventional systems, the master central processing unit (CPU) executes these functions. If a peripheral needs attention, it interrupts the master. After completing the current instruction, the CPU responds by fetching the interrupt vector, storing the current program status, and executing the vector-defined service routine. When finished, the CPU restores the old status and continues with the main program. The CPU time spent in servicing the interrupt varies from several ten's to several hundred's of microseconds, excluding the time required for the actual service routine.

Communication with terminals, I/O ports, or printers slows down the master CPU since it interrupts the execution of the main program and requires execution of routines to interpret and format the I/O data. Processor efficiency thus decreases with time spent servicing the interrupt. Consequently, it is desirable to reduce the CPU time spent in servicing peripherals.

Conventional processors use hardware (i.e., watchdog monitor, wraparound links, etc.) and software to test themselves. Obtaining high coverage is difficult because the processor test kernel (CPU, bus, memory, software) cannot check itself. A watchdog monitor can detect a limited percentage (~65%) of the failures. The ability to check, fully, the kernel is essential for achieving high test coverage.

-3-

In the maintenance or debug mode, interrupt service time is not important, since the master operates in non-real time. However, of concern is the hardware needed, such as the universal asynchronous receiver/transmitter (UART) required for serial I/O, and the counters required with the UART and watchdog monitor.

To date, for a computer system wherein its program is contained in read-only memory, initial software development has been a problem. Either the program had to be burned into a set of PROMs repetitively, as bugs have been corrected, or a means, such as an auxiliary RAM board, had to be constructed with a link to the software development station to down-load corrected software.

It is, therefore, an object of the present invention to provide an improved computer system capable of providing high coverage test capability, including testing of the kernel and of affording an operator interaction with the primary computer with a minimal interruption to the real-time behavior of the primary.

-4-

It is a further object of the present invention to provide a computer system wherein the hardware needed to execute utility functions and translate terminal-generated commands is a minimum.

It is a further object of the present invention to provide a computer system capable of minimizing the interrupt period when servicing peripherals.

It is a further object of the present invention to provide a computer system wherein the portion of the operating system performing self-test, watchdog monitor and user interface functions is localized within the service computer.

It is a still further object of the present invention to incorporate down-loading capability into the system for program development purposes.

Other objects and advantages of the present invention will become apparent as the description thereof proceeds.

Summary of the Invention

In accordance with the present invention, there is provided a computer system. Included is a primary computer for processing digital information, and an interconnecting local bus. A service computer is connected to the primary computer through the local bus for enhancing the system by providing system hardware and software testing capabilities and for affording an operator interaction with the primary computer with insignificant interruption to the real-time behavior thereof.

In the preferred embodiment, the service computer is a microcomputer which includes a CPU, two real-time counters and a universal asynchronous receiver/transmitter.

## Brief Description of the Drawing

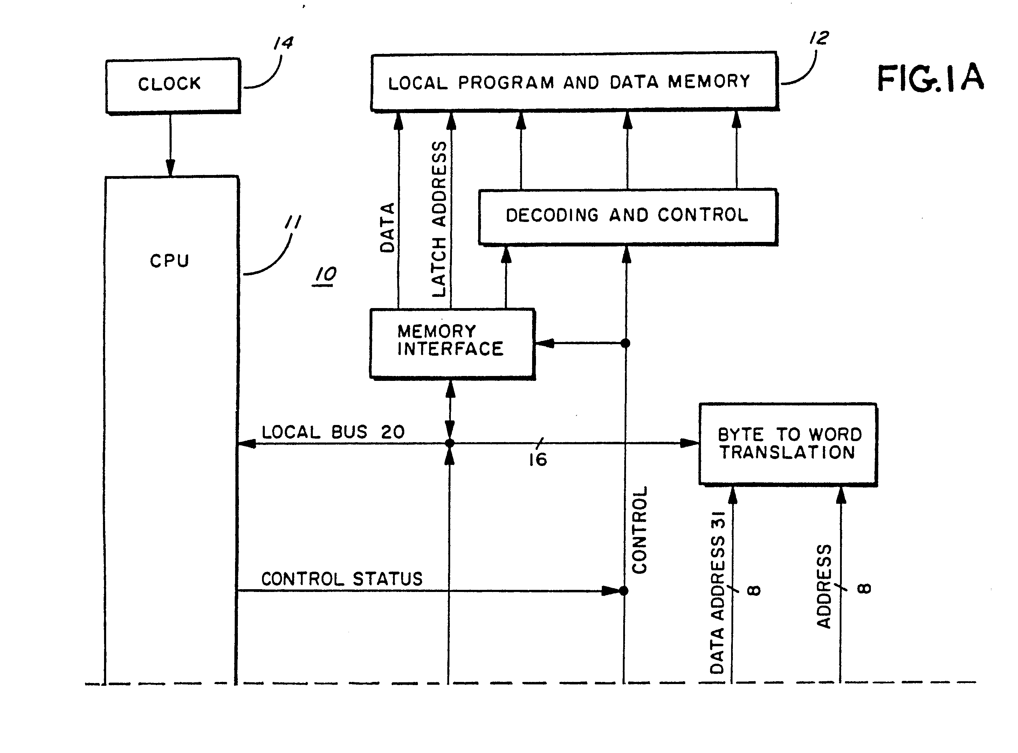

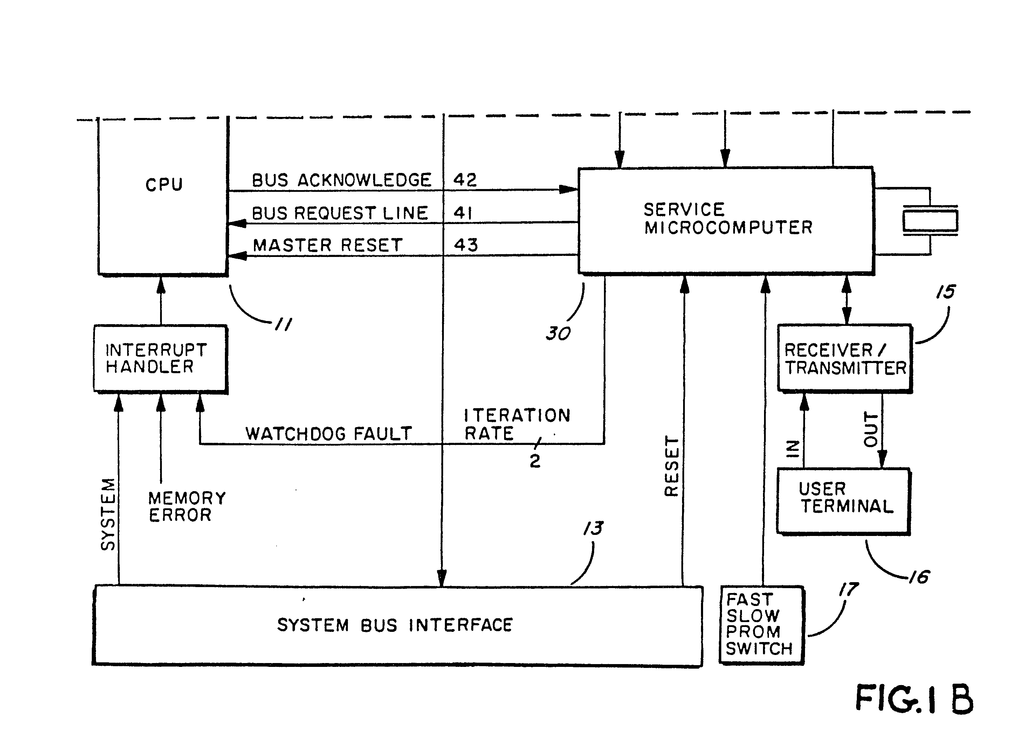

In the accompanying drawing comprising Figs. 1A and 1B, there is shown in block diagram form the preferred embodiment of the computer system of the present invention.

## Description of the Preferred Embodiment

In accordance with the present invention, and referring now to the drawing, there is shown the preferred embodiment of the computer system of the present invention. A primary computer 10 is provided for processing digital information. Primary computer 10 includes a central processing unit (CPU) 11, a program and data memory 12, a system bus interface 13, a clock 14, input/output device, receiver/transmitter 15, a user terminal 16, and a fast/slow PROM switch 17. Also included is interconnecting bus 20 and a service microcomputer 30 connected to the primary computer 10 through the bus 20 for enhancing the system by providing system hardware and software testing capabilities and for affording an operator interaction with the primary computer with insignificant interruption to the real-time behavior thereof. In the preferred embodiment, a single chip Zilog Z8 microcomputer with a serial I/O port has been chosen as the service microcomputer.

The Zilog Z8 microcomputer 30 includes an 8-bit CPU, a 144 byte RAM, a 2000 byte ROM, two 8-bit counters and a univeral asynchronous receiver/ transmitter (UART). As shown in the drawing, bus control is passed between the two processors 11 and 30 by a master/slave protocol which mutually excludes one or the other from bus access. The slave or service computer 30 requests bus access by asserting the bus request line 41; the master or primary computer 11 grants access with the bus acknowledge signal 42.

In the serial I/O mode, the Z8 microcomputer UART converts from serial to parallel format, and the microcomputer 30 stores the data and makes intelligent decisions as to what to do with it. Only when necessary will the data be transferred to the master RAM, and if applicable, as a block.

In a typical input operation, the UART interrupts the service microcomputer 30 and the service microcomputer stores the data in its RAM. At the end of the message, the service microcomputer interprets the command, strips the command off, formats the data, and generates a bus request signal to the primary CPU 11, in the preferred embodiment a Zilog Z8001 or Z8002. Upon receipt of a bus acknowledge signal, it transfers the formatted data message to the master RAM. With this approach, the master CPU 11 is halted only a few microseconds when receiving a multiple byte message, rather than hundreds of microseconds as is the case with the conventional interrupt.

The service microcomputer 30 is also capable of transmitting data under direction from the master CPU 11. In a typical output operation, the Z8001 processor 11 places its output data in a buffer region in local memory. The Z8001 then instructs the Z8 service microcomputer 30 by writing an instruction into the Z8 port over the data bus 31. This interrupts the Z8 and causes it to execute the proper routine to format the data, then transmits the data out through the UART.

The service microcomputer 30 provides full test capability for the primary computer 10: initiated (foreground) or periodic (background) modes, and simple or high coverage go/no-go checks. However, because of its small (2K/4K) program memory, service microcomputer 30 will be limited to high coverage kernel testing: executing test routines and having the service microcomputer 30 compare the results with a predefined value or with the results computed in parallel by the main processor. To start these tests, service microcomputer 30 interrupts the primary computer 10 and points it to the test routine with the interrupt vector. If the test result is positive, the primary computer continues; if it is negative, the primary is halted and a fault is indicated.

-9-

Since the service processor 30 has its own clock, it can not only perform as watchdog monitor, but as an intelligent watchdog monitor. It starts a counter at the beginning of the master iteration period and interrupts the main processor 11 to request an immediate response. It indicates a failure when its timer overflows before the response, an acknowledge signal, is received. The watchdog monitor period can be altered simply by loading different limit values into the counter.

As those skilled in the art will appreciate, the computer system of the present invention has significant advantages. When used as an intelligent serial I/O device, service microcomputer 30 replaces a UART and a counter/timer chip. When used as an intelligent direct memory access device, the time during which the primary computer 10 is diverted from the main program is reduced at least an order of magnitude (microseconds instead of tens of microseconds). When performing as a system monitor, service microcomputer 30 can recognize and execute numerous primary computer system commands such as HALT, CONTINUE, RESET: and conventional debug commands such as DISPLAY, FILL, RUN, SINGLE STEP, INSPECT REGISTER, POWER-UP, etc. transmitted serially from the terminal 16 to the service computer. When operating as a tester, service microcomputer 30 can check the master or primary computer, including the kernel, with high coverage. It can also implement the watchdog monitor function without extra hardware. In addition to serial I/O, test, and monitor functions, the service microcomputer can perform many additional functions with little or no additional hardware.

Another feature of this single board computer system is real-time monitoring of CPU and memory operations. In a typical application, data words in the local memory are periodically read by the main processor 11. The bus request-bus acknowledge procedure is used to gain access to the local memory and the main processor is not interrupted, and in fact is barely slowed down - on the order of 10 microseconds per byte. Moreover, the monitoring is intelligent since the service processor can analyze and screen the snapshots, which it takes, of memory.

During the software development phase of the system, the fast/slow PROM switch 17 is used to inhibit the primary computer from attempting to execute its program. Instead, control is maintained by the service computer 30.

-11-

While a computer system has been described in what is presently considered to be a preferred embodiment of the invention, it will be apparent to those skilled in the art that various changes and modifications may be made in the structure and in the instrumentalities utilized without departing from the true spirit and scope of the invention. For example, both primary and service computer may be on a single VLSI chip. Furthermore, a 16-bit microcomputer may be used as the service computer to reduce complexity.

-12-

## Claims

1. A computer system comprising:

   o a primary computer for processing digital information;

   o an interconnect bus; and

   o a service computer connected to the primary computer through the interconnect bus for enhancing the system by providing system hardware and software testing capabilities and for affording an operator interaction with the primary computer with insignificant interruption to the real-time behavior thereof.

2. A system as claimed in Claim 1, wherein the service computer is a microcomputer further serving to relieve the primary computer of auxiliary functions and including a CPU, a pair of real-time counters and a universal asynchronous receiver/transmitter (UART).

3. A system as claimed in Claim 2, wherein one counter and the UART implement a serial I/O port, and the other counter in combination with the CPU forms a watchdog monitor and iteration counter.

4. A system as claimed in Claim 1, wherein bus control is passed between the two computers by a primary/ service protocol which excludes one or the other from bus access.

5. A system as claimed in Claim 4, wherein the service computer requests bus access by asserting a bus request line and the primary computer grants access with a bus acknowledge signal.

6. A system as claimed in Claim 1, wherein the service computer performs serial I/O port functions.

7. A system as claimed in Claim 1, further comprising a user terminal and wherein the service computer performs interface functions between the primary computer and the user terminal.

8. A system as claimed in Claim 1, wherein the service computer provides timing and control functions to perform system self-test.

9.  A system as claimed in Claim 1, wherein the service computer performs real-time monitoring functions of data contained in the primary system.

10  A system as claimed in Claim 1, wherein the service microcomputer performs system control functions.

11  A single board computer system comprising:

o   a primary computer for processing digital information, the computer including a central processing unit; program and data memory; input/output means; a clock; and a system bus interface;

o   an interconnecting direct link local bus; and

o   a service microcomputer connected to the primary computer through the local bus for relieving the primary computer of auxiliary functions and for affording an operator interaction with the primary computer with insignificant interruption to the real-time behaviour thereof; the service microcomputer including a microprocessor, a program and data memory, a serial I/O port; and an iteration counter and watchdog monitor.

12. The system of Claim 11 wherein the service microcomputer performs: intelligent serial I/O user interface; timing functions; system self-test functions; intelligent watchdog monitor functions; real-time monitoring functions of data contained in the system; and system control functions.

13. The system of Claim 12 wherein the service computer recognizes and interprets user commands and one of: translates the commands into an interrupt request signal and an interrupt vector for forcing the primary computer to execute said commands; and executes said commands itself.

14. The system of Claim 11 wherein bus control is passed between the respective computers by a primary/service protocol which excludes one or the other from bus access.

15. The system of Claim 14 wherein the service microcomputer requests bus access by asserting a bus request line and the primary computer grants access with a bus acknowledge signal.

0082722

-16-

16. The system of Claim 12 wherein the service microcomputer stores in its program memory the operating system program for the intelligent watchdog monitor functions, the intelligent serial I/O user interface, system self-test functions, and real-time monitoring function.

17. The system of Claim 14 wherein the primary computer transmits commands to the service microcomputer, interrupting and forcing the service microcomputer to execute the commands.

18. The system of Claim 11 further comprising means for indicating whether the system program memory consists of read-only memory or random access memory.

19. The system of Claim 18 wherein the indicating means informs the service microcomputer whether the system program memory consists of read-only memory or random access memory.

FIG.1A

CLOCK 14

CPU 11

10

LOCAL PROGRAM AND DATA MEMORY 12

DECODING AND CONTROL

MEMORY INTERFACE

DATA

LATCH ADDRESS

LOCAL BUS 20

16

BYTE TO WORD TRANSLATION

CONTROL

CONTROL STATUS

DATA ADDRESS 31

8

ADDRESS

8

1/2

0082722

FIG. 1 B

0082722